# EUROPEAN PATENT SPECIFICATION

(11) **EP 0 549 067 B1**
(45) Date of publication and mention of the grant of the patent: **19.07.1995**
(21) Application number: 92204011.8
(22) Date of filing: 18.12.1992
(51) Int. Cl.: C02F 11/08, B09B 3/00, B08B 3/04

(54) **Method and apparatus for the continuous removal of dirt residues from metallic waste**
Verfahren und Vorrichtung für kontinuierliche Entfernung von Schmutzresten aus Metallabfall
Procédé et dispositif pour l'élimination continue de restes d'encrassement de déchets métalliques

(30) Priority: 23.12.1991 NL 9102168
(43) Date of publication of application: 30.06.1993
(73) Proprietor: HOOGOVENS GROEP B.V., NL-1970 CA IJmuiden (NL)
(72) Inventor: Greefkes, Johannes, NL-1946 AB Beverwijk (NL); Engel, Martinus, NL-1942 AN Beverwijk (NL)
(74) Representative: Hansen, Willem Joseph Maria

(56) References cited:
- EP-A- 0 105 551
- EP-A- 0 442 027
- WO-A-88/06144
- NL-A- 8 900 936

## Description

The invention relates to a method for the continuous removal of adhering dirt residues from metallic waste, e.g. household or domestic waste. The invention also relates to apparatus for continuous removal of dirt residues from metallic waste.

Metallic waste, particularly of steel and aluminium occurs in, for example, collected household waste in the form of used packaging for foodstuffs, drink or chemicals. A magnetic or a turbulent flow separator has been used to separate the metallic waste from the other household waste. The metallic waste thus separated is not immediately suitable for reuse, since the adhering dirt residues must first be removed. In this context adhering dirt residues are taken to be a wide range of materials, particularly paper and elastomers, yet also paint, printing ink, glue, iron oxide, sand, remains of the original contents and other types of dirt that adhered onto the metallic waste during collection or was introduced into it. Adhering dirt residues may also be taken to include the coating of another metal type or a component of another metal type attached to the metallic waste which was applied onto the metallic waste. Examples of this are to be found in tinplated or chromium plated beverage cans in steel which may or may not be provided with an aluminium lid.

A known method applied in practice for the continuous cleaning of metallic waste from adhering dirt residues is pyrolysis. In this the metallic waste is heated in a low oxygen atmosphere so that at least a part of the dirt residues decomposes and may be extracted in gaseous state. Pyrolysis has a number of inconveniences. A first is the energy consumption that is associated with heating the metallic waste in order to bring the dirt residues up to a temperature at which they decompose. A second inconvenience is that, in the case of pyrolysis, through the decomposition, gases occur which must be extracted carefully in order to prevent them spreading into the atmosphere. Another inconvenience is also that solid dust particles such as carbon particles from the pyrolysed dirt residues can deposit onto the metallic waste. If subsequently the metallic waste has to have a coating removed in an electrolysis bath, then such a deposit causes problems because it hampers the access of the electrolyte to the coating. Another inconvenience of pyrolysis is that at the high temperature at which decomposition of dirt residues takes place, a coating present on the metallic waste such as a layer of tin or chromium may form a double layer with the metallic background which is difficult to remove by electrolysis. This means that the metallic waste cleaned by means of pyrolysis is less suitable for subsequent electrolysis and consequently for reuse. Yet another inconvenience of pyrolysis is that, in the case of tinplated metallic waste, a part of the tin vaporises or oxidises and is therefore lost for reuse.

US patent 3734776 and European patent application 93264 describe methods and apparatus for cleaning oil from metal fines and chips, in which detergent solutions are applied to the metal, and then separated from the oil and sludge and recycled. Such methods are not particularly suitable for the more complex problem of removing a variety of types of adhering dirt such as arises with household waste.

The object of the invention is to provide a method and an apparatus with which the inconveniences connected with the known method of treating household waste using pyrolysis are avoided. The invention can provide other advantages such as further described in the following.

In accordance with the invention there is provided a method for the continuous removal of dirt residues from metallic waste, comprising the steps of
(i) rinsing the waste with washing water,
(ii) separating the washing water, now carrying dirt residues, from the waste,
(iii) cleaning at least part of the washing water carrying dirt residues in a wet oxidation process, and preferably
(iv) at least partially returning the washing water to the rising step.

This method offers the advantage that the metallic waste does not need to be increased in temperature to such a degree as is necessary with the known method using pyrolysis and, because of this, already demands less energy. It prevents a coating present on the metallic waste from diffusing into the waste and consequently the coating remains removable in a later cleaning stage without additional difficulties. Another advantage of the method can be that only very small flows of waste occur which themselves are easy and simple to control.

Another advantage is that a coating such as tin may be recovered with less losses.

It has been found that a wet oxidation process works exothermally at a COD [Chemical Oxygen Demand] exceeding approximately 4%. If the intention is to free the metallic waste from adhering dirt residues to any significant extent this COD content may not be attained unless special measures are taken when rinsing the metallic waste. In order to obtain a COD of 4% or more and consequently the possibility of exothermal wet oxidation whereby no external heat needs to be supplied to the oxidation process, particularly advantageously in the method in accordance with the invention the rinsing comprises at least first and second rinsing stages, and the washing water which becomes laden in this first rinsing stage is cleaned in a wet oxidation process. In the first rinsing stage a substantial part of the adhering dirt is washed away with a relatively small amount of washing water. This can achieve the effect that the COD content is in the range in which, in the case of wet oxidation, the reaction takes place exothermally. The wet oxidation process should preferably be carried out at a pressure ranging from 50 bar to 100 bar and at a temperature ranging from 200°C to 350°C.

Depending on the amount of adhering dirt residues, it may be desirable to include the step of subjecting the washing water carrying dirt residues to thickening (or concentration) in in a settling tank, prior to the wet oxidation process. Thickening may take place for example in a settling tank provided with an upper overflow for cleaner water and a lower tapping point for taking off the washing water laden with COD to a desired content. On the one hand this embodiment can achieve the effect that, in the case of wet oxidation of the laden, thickened washing water, the reaction takes place completely exothermally. On the other hand, the water that is taken off via the overflow from the settling tank is sufficiently clean for producing a desired washing effect.

Of particular advantage is a method in which, following the first rinsing stage, the rinsing comprises a second rinsing stage and the laden washing water from the second rinsing stage is used as washing water in the first rinsing stage. In this embodiment washing water, which is used in the second rinsing stage and rinses away adhering dirt residues, is used once again in the first rinsing stage so that the total quantity of dirt residues, and consequently the COD content, is increased still further. Rinsing the metallic waste then takes place in stages in counterflow.

In order to increase the effect of the rinsing it is preferable for the metallic waste to be soaked, e.g. in water before rinsing. The metallic waste is rinsed together with the soaked, adhering dirt residues. If so desired dirt residues which loosen during soaking may be collected in the laden washing water from the first rinsing stage.

In order to avoid coarse dirt residues and small parts of metallic waste arriving in the wet oxidation process thereby possibly causing blockages, preferably the dirt-carrying washing water is sieved in at least one stage. In addition to dirt residues and small metallic waste, the sieved material may contain salts from the adhering water which are effectively removed in this manner. Dirt residues and small metallic waste may be separated easily, for example by means of a magnetic separator and then processed further, the dirt residues simply as normal household waste, the small metallic waste, compacted into briquettes if required, as normal metallic waste. By appropriate selection of the sieve mesh size the COD content in the laden washing water flowing off to the wet oxidation process may be set at a desired level. Essentially no waste water is released in the case of the method proposed. Salts concentrated in the washing water can leave the rinsing process in adhering water on coarse dirt residues.

Preferably the method includes the step of passing the cleaned washing water from said wet oxidation process to a settling tank for removal of sludge therefrom, prior to returning the cleaned washing water to the rinsing step. The washing water coming from the wet oxidation process contains inert material, products of oxidation which can settle, and soluble low-molecular fatty acids. The use of a settling tank can prevent those components from cumulating in the washing water as a consequence of the reuse of washing water. Fatty acid cumulation does not present any problem as far as the washing process is concerned.

The effectiveness of the method in accordance with the invention may be further increased if the washing water applied to the metallic waste has a temperature of at least 70 °C. At this temperature of the washing water large portions of the adhering dirt residues soften and may then be flushed away highly effectively.

Preferably a solvent is added to the washing water for loosening the dirt residues from the waste. For most cases the solvent is neutral to prevent metallic coating, such as tin, on the waste from dissolving.

At a COD content exceeding approximately 4% the wet oxidation process runs exothermally. Washing water in the reactor for wet oxidation partly converts to steam as it leaves the process. Advantageously, waste gases leaving the wet oxidation process are used, at least in part, and optionally following reheating, for generating electrical energy by means of an expansion turbine. It is alternatively possible to generate steam and to drive a steam turbine. Waste gases leaving the wet oxidation process are essentially water vapour, nitrogen, carbon dioxide, finely distributed water droplets and they may contain inert contaminants and oxidation residues. With this embodiment of the method, at least a part of the exothermal energy present in the waste gases is used for generating electrical energy. This electrical energy may be used in the process, for example, for supplying pumps for the circulating washing water or for supplying compressors which are needed for compressing oxygen or air for the wet oxidation process.

The waste gases may also be used to good effect for air conditioning a building and/or at least in part for preheating washing water which is used for the rinsing.

The invention creates the possibility of first freeing the waste gases from the above mentioned components and then regeneratively reheating the condensable part and generating electrical energy by means of an expansion turbine.

In order to make the metallic waste suitable for recirculation, it is desirable that this waste is freed from any coating. A quite common form of coating is a tin layer or a chromium layer. In the method in accordance with the invention the waste gases leaving the wet oxidation may be used at least in part for heating an electrolysis bath for the electrolytic removal of a metallic coating on the waste. The electrolytic removal of a metallic coating on the metallic waste produces a pure form of the metal of the metallic coating on one of the two electrodes in the electrolysis bath and leaves behind pure, non-contaminated metallic waste of the base material. The electrolytic process is preferably carried out at increased temperature. For increasing the temperature of the electrolysis bath it is preferable to make use of the exothermal energy present in the waste gases leaving the wet oxidation process. In this way both expansion energy and thermal content may be recovered at least in part from the waste gases.

In the event that the metallic waste comprises tinplated steel, following cleaning, the metallic waste may be freed from tin. The tin deposits onto the cathode as pure tin. The originally tinplated steel remains in the electrolysis bath as steel sheet and may be taken out of the bath when the electrolysis is finished. Both the steel sheet and the recovered tin are fully reusable in processes for making tinplated steel sheet. In this way no material whatsoever is lost and practically no dirtying of the original metal takes place.

Preferably the waste is freed from tin in an electrolysis bath and sludge originating in the electrolysis bath is likewise subjected to the wet oxidation process. Sludge from the electrolysis bath contains organic material originating from the dirt residues left behind on the metallic waste and, in the case of electrolysis of tin, complex-bound tin too. Consequently the sludge is chemical waste. By subjecting the sludge, whether diluted or not, to a wet oxidation process, the organic material is oxidized at least in part and tin is released. The tin released remains as dissolved tin in the water leaving the wet oxidation reactor. This water may be conveyed back and reused as washing water and/or as top-up water for electrolysis baths. In this way the sludge, actually a chemical waste, is recycled.

Basic washing water is satisfactory for achieving the washing effect. However, if the pH is too high, the tin that may be present in the metallic waste dissolves. The wet oxidation process takes place better in an acid environment. For this reason, a pH in the region of 7 is normally used in practice. In the case of wet oxidation of dirt-carrying washing water the pH of the washing water is lowered in order to attain the desired pH. It can be of particular advantage to add selected amounts of sludge (which is basic) to the laden washing water. The pH of the sludge has a value in the region of 11.

Tin present in the sludge precipitates in part onto suspended particles in the wet oxidation reactor. Along with the waste gases and the free water droplets from the wet oxidation reactor which eventually condense into washing water, these particles are carried to a settling tank where they settle out. The particles settled out, i.e. particles containing tin, may be drained off and pressed into blocks together with metallic waste for electrolytic detinning. It is also possible to convey back to the electrolysis baths the water, now containing tin, that remains following condensation of the waste gases.

In the case of metallic waste in the form of cans the dirt residues adhering in their interiors pose a problem. The dirt residues may originate from the original content of the cans but they may also enter the cans during collection of household waste or because the household waste is intentionally brought in for temporary storage. Such dirt is not readily accessible during rinsing. Preferably therefore prior to rinsing with washing water, the metallic waste is chopped up in order to make its surfaces free for access by the washing water. By chopping up the metallic waste, cans and other closed forms of the waste may be opened and thereby made accessible to the washing water.

During chopping, dirt residues are released as a result of the cans being opened or as a result of mechanical forces which are exerted on the waste during chopping. Yet another embodiment of the method in accordance with the invention is also characterized in that the metallic waste is separated from loose dirt residues following chopping and before rinsing with washing water. This method is of particular significance where the metallic waste is not collected separately and is badly dirtied as a consequence of mixed waste collection. Loose dirt residues may be separated from the metallic waste in a mechanical manner, in itself known. This means that the quantity of adhering dirt residues which need to be treated in a wet oxidation process is limited to a level that is desirable for exothermal action of the wet oxidation process. At the same time, with this embodiment it is possible to remove separately different sorts of metallic parts which were originally bound with the metallic waste. One example which might be imagined is the removal of chopped aluminium lids from a metallic waste of steel beverage cans. Here magnetic belts or turbulent flow separators may be used.

The invention also provides apparatus for the continuous removal of adhering dirt residues from metallic waste. Known apparatus comprises a pyrolysis furnace in which adhering dirt residues are pyrolysed with oxygen excluded. Running such an apparatus has inconveniences as already described above. In addition a pyrolysis furnace poses the problem that the temperature in the furnace is hard to control and that the oxygen concentration in the furnace is hard to control.

The present invention provides apparatus for the continuous removal of adhering dirt residues from metallic waste, comprising a rinsing station for rinsing of the metallic waste, sprayers for spraying washing water onto the metallic waste at said rinsing station, and a wet oxidation reactor for performing wet oxidation of washing water carrying dirt residues from said rinsing station. Preferably the rinsing station comprises a rotatable rinsing drum in which the metallic waste is rinsed. In a rotating rinsing drum the metallic waste to be cleaned is in motion permanently and is therefore easily accessible to the washing water that is supplied through the sprayers. Used washing water laden with dirt residues is cleaned in the wet oxidation reactor to a large extent and in a simple manner.

A sufficiently high COD content for attaining an exothermal reaction in the wet oxidation reactor is obtained when the rinsing drum has at least two rinsing zones, wherein each rinsing zone is preferably provided with its own set of sprayers and the first rinsing zone preferably comprises an immersion zone. In order to prevent coarse dirt residues and small parts of metallic waste from entering the wet oxidation reactor, preferably there is a drain, e.g. of funnel shape for collecting dirt-carrying washing water flowing out of the rinsing drum and a sieving apparatus for sieving out coarse dirt residues from this washing water. The dirt-carrying washing water is first sieved in the rinsing drum and then a finer sieving takes place in the sieving apparatus.

Increase of the COD content of the washing water is possible in an apparatus which has a settling tank for concentrating the dirt residues in the laden washing water.

In a preferred embodiment of the apparatus in accordance with the invention a settling tank for settling of the sludge from the wet oxidation reactor is provided and this settling tank is linked to the rinsing drum for return of washing water. The water produced following condensation of the water gases from the wet oxidation reactor contains inert material and products of oxidation including tin oxides. These contaminants in the water that is reused as washing water may be removed by means of the settling tank in order to prevent cumulation. The sludge produced may be used in the electrolysis process whether or not pressed into briquettes.

At a sufficiently high COD content the wet oxidation process runs exothermally. The overall output of the apparatus may be increased considerably by a heat exchanger for recovering at least a part of the exothermal heat of the waste gases from the wet oxidation reactor and/or by a gas turbine linked to the outlet of the wet oxidation reactor for recovering at least a part of the exothermal heat of the waste gases and of the washing water from the wet oxidation reactor.

In order to make the metallic waste highly accessible to washing water preferably the apparatus has a chopping device for reducing the size of the metallic waste prior to washing in the rinsing drum. At the same time different metal parts may be loosened from the metallic waste and may then be further processed separately.

The apparatus in accordance with the invention can provide the advantage that it may be small and compact, and built for relatively low investment cost and offers a relatively high effective energy yield. The waste flows from this apparatus can be small and also relatively clean. In principle only coarse organic waste is conveyed out of the rinsing drum and sieving apparatuses.

An embodiment of the invention will now be illustrated by way of non-limitative example with reference to the accompanying diagrammatic drawings. In the drawings:
Fig. 1 is a block diagram of some of the flows occurring in the method embodying the invention,
Figs. 2A and 2B show apparatus embodying the invention and suitable for carrying out the method in accordance with the invention, and
Fig. 3 is a block diagram a further part of the apparatus, for recovering exothermal energy from the waste gases and the washing water.

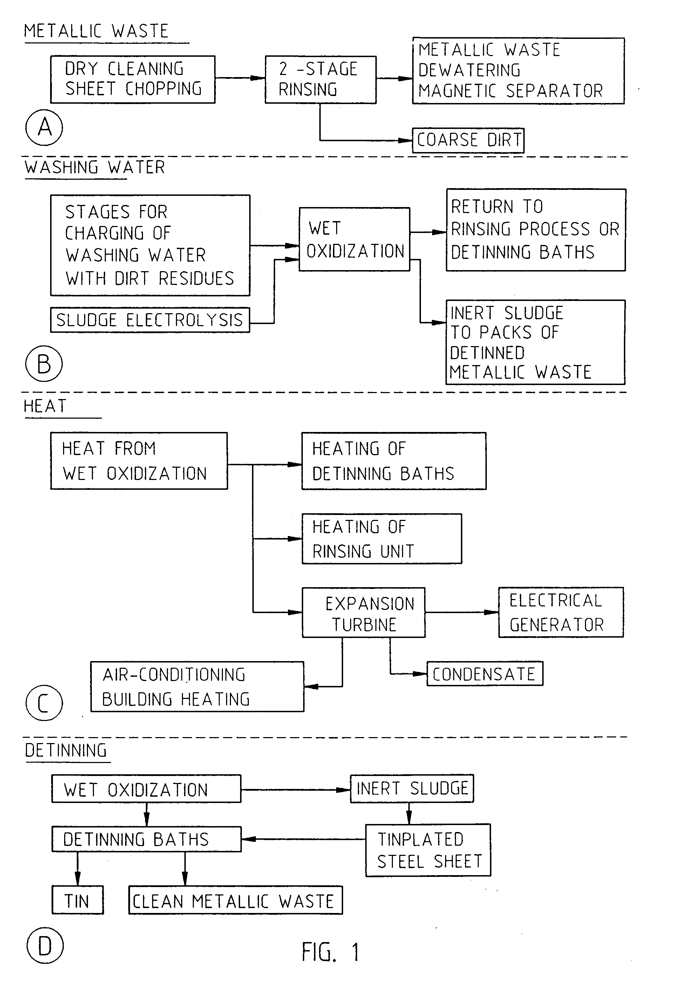

Part A of Fig. 1 is a diagram of the cleaning of the metallic waste. The metallic waste is reduced in size with the aid of a chopping device and made accessible all round to washing water. Following a dry, mechanical cleaning process in which dirt residues and metallic waste are separated, the metallic waste goes to a rinsing unit of two or more stages. The metallic waste leaving the rinsing apparatus is dehydrated on a belt and separated by a magnetic separator from coarse waste residues carried along with it. The metallic waste is then suitable for further processing and/or reuse.

Part B of Fig. 1 is a block diagram of the flow of washing water. The washing water becomes laden with dirt residues in the rinsing apparatus in two or more stages. The washing water, thus contaminated and laden goes to a wet oxidation process. The washing water is returned from the wet oxidation process to the rinsing apparatus. Inert sludge is separated and used in the electrolysis process.

Part C of Fig. 1 is a block diagram of the use of exothermal energy released during the wet oxidation. A part of the exothermal energy which is present in the waste gases and the washing water from the wet oxidation processes is used for heating detinning baths. Another portion of the exothermal energy is used for heating the washing water that is conveyed to the rinsing apparatus. Yet another portion of the exothermal energy present in the waste gases is used as expansion energy for driving a gas turbine which, in its turn, drives an electricity generator. The dehydrated gas flow leaves the gas turbine and is then used as cooling gas for air conditioning. The dehydrated gas flow can cool in the expansion process down to approximately 0 °C without converting or forming ice because the gas is previously freed from suspended and condensable components in regenerative condensers and a high pressure cyclone.

Part D of Fig. 1 shows the detinning. Part of the water from the wet oxidation process goes to the de-tinning baths as top-up water. The majority of the washing water returns to the rinsing apparatus. The coarse dirt residues released during rinsing are suitable for combustion in a household waste incinerator. The inert sludge is pressed into packs or briquettes together with the rinsed, still tinplated sheet and put into the de-tinning baths. The de-tinning baths produce clean tin and clean steel sheet as products.

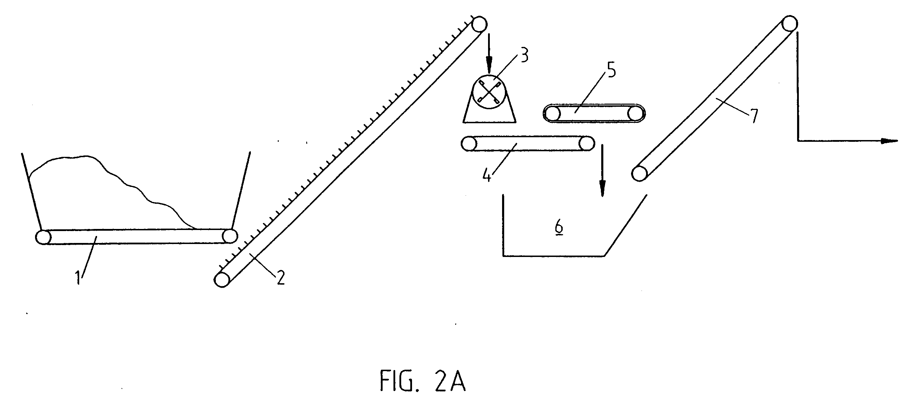

Fig. 2A shows part of the apparatus for preparing the metallic waste for rinsing. There is a bunker 1 for temporary storage of metallic waste. The metallic waste to be cleaned arises primarily from household waste in the form of metal packaging material such as cans for foodstuffs and drinks. From the bunker 1 the metallic waste is conveyed by a conveyor belt 2 which is provided with transverse partitions, to a chopping device 3. The chopping device 3 reduces the size of the metallic waste and partially closed cans are cut open so that the metallic waste becomes accessible all round to the washing water in the rinsing apparatus. The material that leaves the chopping apparatus comprises metallic waste and loosened dirt residues and is carried away by a conveyor belt 4. With the aid of a magnetic belt or a turbulent flow separator 5, the metallic waste and the loosened dirt residues are separated from one another. If so desired a magnetic belt and a turbulent flow separator may both be used together for separating steel metallic waste and non-ferrous waste such as aluminium. Other separating systems could also be used for this. The loosened dirt residues fall into a receptacle 6.

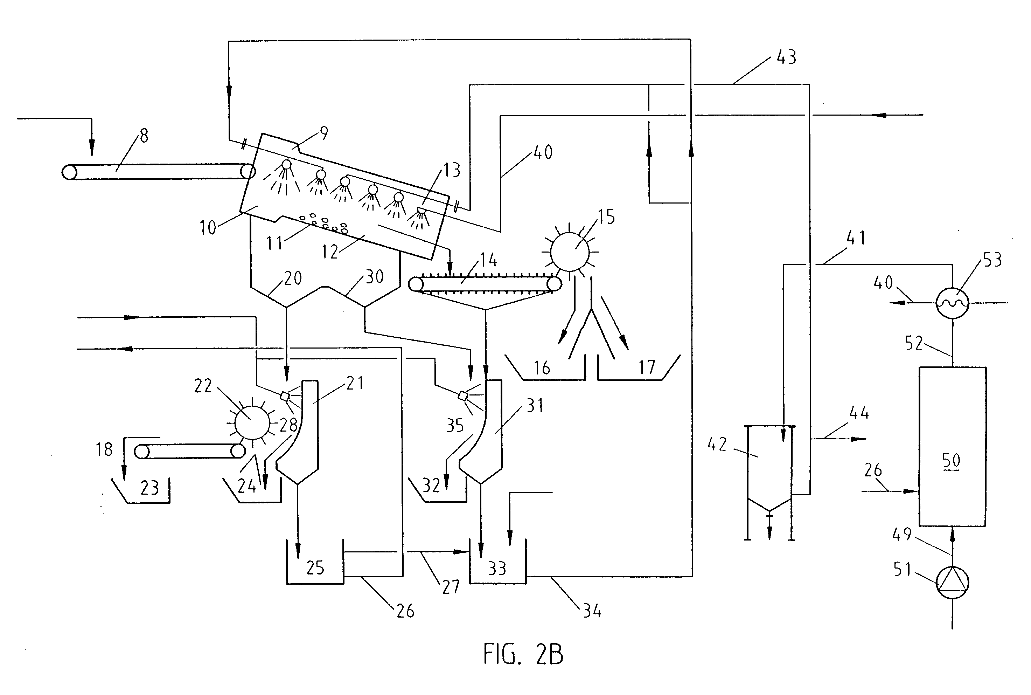

Conveyor belts 7 and 8 (see Fig. 2B) convey the metallic waste to the rinsing apparatus in the form of a rinsing drum 9. Rinsing drum 9 is an obliquely positioned rotating drum which is provided with four compartments. In the first compartment 10 which is wider compared with the other compartments the dirt adhering to the metallic waste is softened in the water present in that compartment. As a result of the rotating motion of the drum 9 or by means of an extra screw conveyor in the drum, the metallic waste goes from compartment 10 to the first rinsing position 11 in which a first rinsing stage takes place. Next the metallic waste goes to compartment 12 for the second rinsing stage and finally to compartment 13 for post-washing and desalting to prevent too much salt from reaching the electrolysis baths. The material leaving the rinsing drum 9 arrives on a conveyor belt 14 on which both coarse dirt residues carried along and metallic waste shed water. Again a magnetic separator and/or a turbulent flow separator 15 separates coarse dirt residues and metallic waste. Coarse dirt residues arrive in a receptacle or bin 16 and the metallic waste arrives in a receptacle or bin 17.

The cleaned metallic waste from bin 17 may be further cleaned of a metal coating in, for example, an electrolysis bath or baths or it may be returned direct to an aluminium smelting plant or steel works. Supply of water to such electrolysis baths is described below.

Beneath compartments 10 and 11 there is a funnel-shaped drain 20 for collecting washing water from the first rinsing stage. This highly contaminated, high COD content washing water goes out of the drain 20 to a sieving bend 21. The material sieved out in the sieving bend 21 is separated by a magnetic separator 22 into metallic waste that goes to a receptacle 23 and coarse dirt residues which go to a receptacle 24. The metallic waste from the receptacle 23 may be processed in the same manner as the metallic waste that is collected in the bin 17. The contaminated, COD laden washing water passing sieving bend 21 is collected in a settling tank 25. The settling tank 25 is provided at a low level with a discharge line 26 which is connected to the reactor 50 for wet oxidation.

A second funnel-shaped drain 30 is located beneath the compartments 12 and 13 of the rinsing drum 9. The washing water from the drain 30 arrives onto a sieving bend 31. The material sieved out by the sieving bend 31 is collected in a tank 32. The contaminated washing water passing the sieving bend 31 is collected in a tank 33. An overflow line 27 from the settling tank 25 also discharges out into the tank 33. Washing water from the tank 33 is pumped through a discharge line 34 to the sprayers of the first compartment 11 of the rinsing drum 9. In the compartment 11 washing water supplied through the line 34 is further charged with COD in order to adjust the COD content to the desired level of approximately 4% or more. Sprayers 28 and 35 are placed above the sieving bends 21 and 31 for rinsing clean the sieving bends with high-pressure water.

The metallic waste is post-rinsed in the final compartment 13 of the rinsing drum 9 with soft or softened water that is supplied through a line 40.

The washing water that is projected from the sprayers of the compartment 12 of the drum 9 comes in part from the wet oxidation process. The water supplied through a line 41 from the wet oxidation process is first taken to a settling tank 42 where inert and inorganic contaminants can settle out. The water taken off from the settling tank 42 goes through a line 43 to the compartment 12. Any surplus water from the wet oxidation process is drained off through a line 44 to the electrolysis baths.

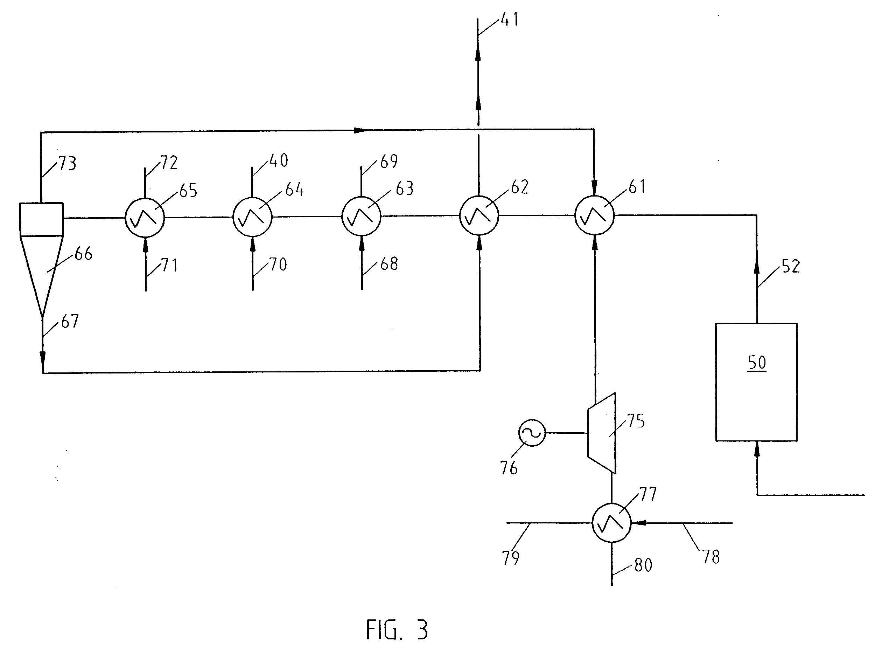

The wet oxidation reactor comprises one or more reactor vessels 50 connected in series. The inlet of the reactor 50 is connected to the line 26 coming from the settling tank 25. Gas containing oxygen such as air or pure oxygen, compressed by compressor 51, is pumped through a line 49 into the reactor 50. The waste gases and washing water leaving the wet oxidation process are conveyed through a line 52 to a set 53 of condensers and heat exchangers and cyclones explained in detail in Fig. 3. In these condensers and heat exchangers 53 exothermal energy, expansion energy and sensible heat may be recovered. Following the condensers and cyclones and heat exchangers 53 the washing water is conveyed through the line 41 to the tank 42.

Fig. 3 illustrates schematically the apparatus 53 for recovering exothermal energy from the waste gases and the washing water which leave the wet oxidation reactor 50 through line 52. The waste gases and the washing water pass through a number of series-connected heat exchangers 61-65. On leaving the reactor 50 the waste gases have a pressure of for example 60 bar, and a temperature of 260°C and are supersaturated with water vapour. There is a pressure drop of, for example, 3 bar over the five heat exchangers 61-65 so that, on entering the condensate separator 66, the waste gases have a pressure of approximately 57 bar and a temperature of approximately 40°C. Water leaves the cyclone and the condensate separator 66 through a line 67 which is connected to the heat exchanger 62. The water is heated in heat exchanger 62 up to approximately 140 °C and is returned towards the rinsing drum 9 through the line 41 as washing water. Electrolysis liquid from the electrolysis baths is heated up from approximately 75°C to approximately 85°C in the heat exchanger 63 via lines 68 and 69. Top-up water for post-washing is heated up from approximately 15°C to approximately 85°C in the heat exchanger 64 via lines 70 and 40. In the heat exchanger 65 cooling water is supplied and discharged via lines 71 and 72, this cooling water being used for cooling the waste gases to the desired temperature, thereby adjusting the humidity to a level at which, following reheating, the gas is suitable for use in an expansion turbine.

Saturated waste gases from the condensate separator 66 are conveyed through a line 73 to the heat exchanger 61 and heated in it to a temperature of approximately 250°C at a pressure of approximately 56 bar and at a very low relative humidity. In gas turbine 75, to which is linked electrical generator 76, the waste gases expand and cool down to a temperature of approximately 0 °C. The now greatly cooled gases run through a heat exchanger 77 to which an air conditioning system for buildings is linked via lines 78 and 79. The waste gases go through a line 80 to a chimney stack (not shown in drawing) or to an extra gas cleaning stage.

## Claims

1. A method for the continuous removal of dirt residues from metallic waste, in which the waste is rinsed with washing water, and at least part of the washing water carrying dirt residues is cleaned,
characterized in that the washing water is cleaned in a wet oxidation process.

2. A method according to claim 1 including subjecting said washing water carrying dirt residues to thickening in a settling tank (25), and conveying thickened washing water carrying dirt residues from said settling tank to said wet oxidation process.

3. A method according to claim 1 or claim 2 wherein the rinsing comprises at least a first rinsing stage and a second rinsing stage in series, said washing water from said first rinsing stage being subjected to said wet oxidation process, and wherein washing water, carrying dirt residues, from said second rinsing stage is used as input washing water for said first washing stage.

4. A method according to any one of claims 1 to 3 further including a step of softening dirt residues on said metallic waste by application of liquid prior to the rinsing.

5. A method according to any one of claims 1 to 4 wherein the cleaned washing water from said wet oxidation process is passed to a settling tank (42) for removal of sludge therefrom, before the cleaned washing water is returned to said rinsing.

6. A method according to any one of claims 1 to 5 including the step of using at least part of waste gases from said wet oxidation process for at least one of (i) generating electrical energy by means of an expansion turbine (75), and (ii) air conditioning of a building.

7. A method according to any one of claims 1 to 6 including the step of heating at least one of (i) washing water being supplied to the rinsing step and (ii) an electrolysis bath for electrolytic removal of a metallic coating on the waste, by means of at least part of waste gases from said wet oxidation process.

8. A method according to any one of claims 1 to 7 wherein said metallic waste comprises tin-plated steel, and the waste is de-tinned following the rinsing, the de-tinning being performed in an electrolysis bath and sludge from the electrolysis bath being subjected to said wet oxidation process.

9. A method according to any one of claims 1 to 8 including the step of chopping said metallic waste, prior to said rinsing step, in order to improve access of said washing water to surfaces of said metallic waste.

10. A method according to claim 9 including the step of performing a preliminary separation of dirt residues from said metallic waste after said chopping step and before said rinsing step.

11. Apparatus for the continuous removal of adhering dirt residues from metallic waste, comprising a rinsing station (9) for rinsing of said metallic waste, sprayers for spraying washing water onto said metallic waste at said rinsing station (9), and means (21,25,50) for cleaning the washing water carrying dirt residues, characterized in that the cleaning means includes a wet oxidation reactor (50) for performing wet oxidation of the washing water carrying dirt residues.

12. Apparatus according to claim 11 wherein said rinsing station comprises a rotatable rinsing drum (9).

13. Apparatus according to claim 12 wherein said rinsing drum (9) has at least two rinsing zones (11,12) in which said metallic waste is treated in series, and separate supply means for said washing water to the respective rinsing zones (11,12).

14. Apparatus according to any one of claims 11 to 13, having drain means (20) for collecting washing water carrying dirt residues from said rinsing station and sieving means (22) for separating coarse dirt residues from said washing water collected by said drain means.

15. Apparatus according to any one of claims 11 to 14 having a settling tank (25) for concentrating dirt residues in said washing water carrying dirt residues, prior to supply thereof to said wet oxidation reactor (50).

16. Apparatus according to any one of claims 11 to 15 further having means (41,42,43) for transferring washing water output from said wet oxidation reactor (50) to said rinsing station (9), whereby said washing water is at least partly recycled.

17. Apparatus according to claim 16 having a settling tank (42) for settling out of sludge from washing water output from said wet oxidation reactor (50), and means (43) for transferring washing water from said settling tank to said rinsing station.

18. Apparatus according to any one of claims 11 to 17 further having at least one heat exchanger (61,62,63,64,65) for recovery of heat from at least one of waste gases and washing water output from said wet oxidation reactor (50).

19. Apparatus according to any one of claims 11 to 18 having a gas turbine (75) connected to said wet oxidation reactor (50) to be driven by waste gases output from said wet oxidation reactor, so as to recover energy from at least one of said waste gases and washing water output from said wet oxidation reactor.

## Patentansprüche

1. Ein Verfahren für die kontinuierliche Beseitigung von Schmutzrückständen von metallischem Abfall, in dem der Abfall mit Spülwasser gespült wird und zumindest ein Teil des Spülwassers, das Schmutzrückstände trägt, gereinigt wird,
dadurch gekennzeichnet,
daß das Spülwasser in einem Naßoxydationsprozeß gereinigt wird.

2. Ein Verfahren nach Anspruch 1,
welches umfaßt, daß das Spülwasser, welches Schmutzrückstände trägt, einer Eindickung in einem Klärtank (25) unterworfen wird und das eingedickte Spülwasser, welches Schmutzrückstände trägt, von dem Klärtank zu dem Naßoxydationsprozeß gefördert wird.

3. Ein Verfahren nach Anspruch 1 oder Anspruch 2,
worin das Spülen zumindest eine erste Spülstufe und eine zweite Spülstufe in Reihe umfaßt, wobei das Spülwasser von der ersten Spülstufe dem Naßoxydationsprozeß unterworfen wird, und worin Spülwasser, das Schmutzrückstände trägt, von der zweiten Spülstufe als Eingangsspülwasser für die erste Spülstufe verwendet wird.

4. Ein Verfahren nach einem der Ansprüche 1 bis 3,
das weiterhin einen Schritt umfaßt, daß Schmutzrückstände an dem metallischen Abfall durch Verwendung einer Flüssigkeit vor dem Spülen weichgemacht wird.

5. Ein Verfahren nach einem der Ansprüche 1 bis 4,
worin das gereinigte Spülwasser von dem Naßoxydationsprozeß einem Klärtank (42) zur Beseitigung von Schlamm aus diesem zugeführt wird, bevor das gereinigte Spülwasser zum Spülen zurückgeführt wird.

6. Ein Verfahren nach einem der Ansprüche 1 bis 5,
welches den Schritt umfaßt, daß zumindest ein Teil der Abgase von dem Naßoxydationsprozeß für (i) die Erzeugung elektrischer Energie mittels einer Expansionsturbine (75) und/oder (ii) die Klimatisierung eines Gebäudes verwendet wird.

7. Ein Verfahren nach einem der Ansprüche 1 bis 6,
das den Schritt umfaßt, daß (i) Spülwasser, welches dem Spülschritt zugeführt wird und/oder (ii) ein Elektrolysebad für die elektrolytische Beseitigung einer metallischen Beschichtung auf dem Abfall mittels zumindest eines Teils der Abgase von dem Naßoxydationsprozeß erwärmt wird.

8. Ein Verfahren nach einem der Ansprüche 1 bis 7,
worin der metallische Abfall verzinnten Stahl umfaßt und der Abfall nach dem Spülen entzinnt wird, wobei das Entzinnen in einem Elektrolysebad durchgeführt wird und Schlamm von dem Elektrolysebad dem Naßoxydationsprozeß unterworfen wird.

9. Ein Verfahren nach einem der Ansprüche 1 bis 8,
das den Schritt umfaßt, daß der metallisches Abfall vor dem Spülschritt zerhackt wird, um die Zugänglichkeit des Spülwassers zu Oberflächen des metallischen Abfalls zu verbessern.

10. Ein Verfahren nach Anspruch 9
das den Schritt umfaßt, daß eine Vortrennung von Schmutzrückständen von dem metallischen Abfall nach dem Zerhackungsschritt und vor dem Spülschritt durchgeführt wird.

11. Anlage für die kontinuierliche Beseitigung von anhaftenden Schmutzrückständen von metallischem Abfall mit einer Spülstation (9) zum Spülen des metallischen Abfalls, Sprühvorrichtungen zum Sprühen von Spülwasser auf den metallischen Abfall an der Spülstation (9) und einem Mittel (21,25,50) zum Reinigen des Spülwassers, welches Schmutzrückstände trägt, dadurch gekennzeichnet, daß das Reinigungsmittel einen Naßoxydationsreaktor (50) zur Durchführung der Naßoxydation des Spülwassers, welches Schmutzrückstände trägt, umfaßt.

12. Anlage nach Anspruch 11,
worin die Spülstation eine drehbare Spültrommel (9) umfaßt.

13. Anlage nach Anspruch 12,
worin die Spültrommel (9) zumindest zwei Spülbereiche (11,12), in denen der metallische Abfall in Reihe behandelt wird, und getrennte Zuführmittel für das Spülwasser zu den entsprechenden Spülbereichen (11,12) hat.

14. Anlage nach einem der Ansprüche 11 bis 13
mit Entwässerungsmitteln (20) zum Sammeln von Schmutzrückstände tragendem Spülwasser von der Spülstation und Siebmitteln (22) zum Trennen von groben Schmutzrückständen von dem Spülwasser, welches durch die Entwässerungsmittel gesammelt worden ist.

15. Anlage nach einem der Ansprüche 11 bis 14
mit einem Klärtank (25) zur Konzentrierung von Schmutzrückständen in dem Spülwasser, das Schmutzrückstände trägt, vor der Zuführung von diesem zu dem Naßoxydationsreaktor (50).

16. Anlage nach einem der Ansprüche 11 bis 15,
die weiterhin Mittel (41,42,43) umfaßt, um den Spülwasserausgang von dem Naßoxydationsreaktor (50) der Spülstation (9) zuzuführen, wodurch das Spülwasser zumindest zum Teil recycelt wird.

17. Anlage nach Anspruch 16
mit einem Klärtank (42), um Schlamm aus dem Spülwasserausgang des Naßoxydationsreaktors (50) auszufällen, und Mitteln (43), um Spülwasser von dem Klärtank der Spülstation zuzuführen.

18. Anlage nach einem der Ansprüche 11 bis 17
mit weiterhin mindestens einem Wärmetauscher (61,62,63,64,65) zur Rückgewinnung von Wärme aus den Abgasen und/oder dem Spülwasserausgang von dem Naßoxydationsreaktor (50).

19. Anlage nach einem der Ansprüche 11 bis 18
mit einer Gasturbine (75), die mit dem Naßoxydationsreaktor (50) verbunden ist, um durch Abgase von dem Naßoxydationsreaktor angetrieben zu werden, um Energie von den Abgasen und/oder dem Sprühwasserausgang von dem Naßoxydationsreaktor rückzugewinnen.

## Revendications

1. Procédé pour éliminer en continu des résidus d'encrassement de déchets métalliques, dans lequel les déchets sont rincés avec de l'eau de lavage et une partie au moins de l'eau de lavage transportant les résidus d'encrassement est nettoyée, caractérisé en ce que l'eau de lavage est nettoyée dans un traitement d'oxydation par voie humide.

2. Procédé selon la revendication 1 incluant le fait de soumettre ladite eau de lavage transportant les résidus d'encrassement à un épaississement dans un bac de décantation (25) et le fait d'acheminer l'eau de lavage épaissie et contenant les résidus d'encrassement dudit bac de décantation audit traitement d'oxydation par voie humide.

3. Procédé selon la revendication 1 ou la revendication 2, dans lequel le rinçage comprend au moins un premier étage de rinçage et un second étage de rinçage en série, ladite eau de lavage provenant dudit premier étage de rinçage étant soumise audit traitement d'oxydation par voie humide, et dans lequel de l'eau de lavage, transportant des résidus d'encrassement, qui provient dudit second étage de rinçage est utilisée comme eau de lavage d'entrée pour ledit premier étage de rinçage.

4. Procédé selon l'une quelconque des revendications 1 à 3, comprenant en outre une étape de ramollissement des résidus d'encrassement sur lesdits déchets métalliques par application d'un liquide avant le rinçage.

5. Procédé selon l'une quelconque des revendications 1 à 4, dans lequel l'eau de lavage nettoyée qui provient dudit traitement d'oxydation par voie humide est envoyée à un bac de décantation (42) destiné à en retirer les boues, avant que l'eau de lavage nettoyée ne soit renvoyée audit rinçage.

6. Procédé selon l'une quelconque des revendications 1 à 5, comprenant en outre l'étape d'utilisation d'une partie au moins des gaz rejetés par ledit traitement d'oxydation par voie humide à l'une au moins des fins suivantes :
(i) production d'énergie électrique au moyen d'une turbine de détente (75), et
(ii) climatisation d'un bâtiment.

7. Procédé selon l'une quelconque des revendications 1 à 6, comprenant en outre l'étape de chauffage, à l'aide d'une partie au moins des gaz rejetés par ledit traitement d'oxydation par voie humide, de l'un au moins des produits suivants :
(i) l'eau de lavage envoyée à l'étape de rinçage, et
(ii) un bain d'électrolyse destiné à l'élimination par voie électrolytique d'un revêtement métallique se trouvant sur les déchets.

8. Procédé selon l'une quelconque des revendications 1 à 7, dans lequel lesdits déchets métalliques comprennent de l'acier étamé, et les déchets sont désétamés après le rinçage, le désétamage étant réalisé dans un bain d'électrolyse et la boue sortant dudit bain d'électrolyse étant soumise audit traitement d'oxydation par voie humide.

9. Procédé selon l'une quelconque des revendications 1 à 8, comprenant en outre l'étape de hachage desdits déchets métalliques avant ladite étape de rinçage, afin d'améliorer l'accès de ladite eau de lavage aux surfaces desdits déchets métalliques.

10. Procédé selon la revendication 9, comprenant l'étape de réalisation d'une séparation préliminaire des résidus d'encrassement et des déchets métalliques, après ladite étape de hachage et avant ladite étape de rinçage.

11. Appareil pour l'élimination continue de résidus d'encrassement adhérents de déchets métalliques, qui comprend un poste de rinçage (9) pour rincer lesdits déchets métalliques, des pulvérisateurs pour projeter de l'eau de lavage sur lesdits déchets métalliques au niveau dudit poste de rinçage (9) et des moyens (21, 25, 50) pour nettoyer l'eau de lavage qui transporte des résidus d'encrassement, caractérisé en ce que le moyen de lavage inclut un réacteur (50) d'oxydation par voie humide destiné à effectuer une oxydation par voie humide de l'eau de lavage qui transporte des résidus d'encrassement.

12. Appareil selon la revendication 11, dans lequel ledit poste de rinçage comprend un tambour de rinçage rotatif (9).

13. Appareil selon la revendication 12, dans lequel ledit tambour de rinçage (9) comporte au moins deux zones de rinçage (11, 12) dans lesquelles lesdits déchets métalliques sont traités en série et un moyen d'alimentation séparé en ladite eau de lavage pour les zones de rinçage respectives (11, 12).

14. Appareil selon l'une quelconque des revendications 11 à 13, comportant un moyen de drainage (20) destiné à recueillir l'eau de lavage qui transporte des résidus d'encrassement en provenance dudit poste de rinçage ainsi qu'un moyen de tamisage (22) destiné à séparer les résidus d'encrassement grossiers de ladite eau de lavage recueillie par ledit moyen de drainage (20).

15. Appareil selon l'une quelconque des revendications 11 à 14, comportant un bac de décantation (25) destiné à concentrer les résidus d'encrassement dans ladite eau de lavage qui transporte des résidus d'encrassement avant de l'envoyer audit réacteur (50) d'oxydation par voie humide.

16. Appareil selon l'une quelconque des revendications 11 à 15, comportant en outre des moyens (41, 42, 43) pour transférer l'eau de lavage sortant dudit réacteur (50) d'oxydation par voie humide vers ledit poste de rinçage (9) ce qui fait que ladite eau de lavage est au moins partiellement recyclée.

17. Appareil selon la revendication 16, comportant un bac de décantation (42) pour faire décanter la boue de l'eau de lavage sortant dudit réacteur (50) d'oxydation par voie humide et un moyen (43) pour transférer l'eau de lavage dudit bac de décantation audit poste de rinçage.

18. Appareil selon l'une quelconque des revendications 11 à 17, comportant en outre au moins un échangeur de chaleur (61, 62, 63, 64, 65) pour récupérer de la chaleur de l'un au moins des gaz usés et de l'eau de lavage sortant dudit réacteur (50) d'oxydation par voie humide.

19. Appareil selon l'une quelconque des revendications 11 à 18, comportant une turbine à gaz (75) couplée audit réacteur (50) d'oxydation par voie humide pour être entraînée par les gaz usés qui sortent dudit réacteur (50) d'oxydation par voie humide de manière à récupérer de l'énergie de l'un au moins desdits gaz usés et de ladite eau de lavage sortant dudit réacteur (50) d'oxydation par voie humide.
